Europäisches Patentamt

European Patent Office

Office européen des brevets

(19)

(11) Numéro de publication: **0 245 165 B1**

(12) **FASCICULE DE BREVET EUROPEEN**

(45) Date de publication de fascicule du brevet:
28.08.91

(21) Numéro de dépôt: 87401010.1

(22) Date de dépôt: 30.04.87

(51) Int. Cl.⁵: **H04J 14/02**, H04B 10/04,
G02B 6/34

(54) Dispositif optiques de transmission de données à multiplexage de fréquence.

(30) Priorité: 06.05.86 FR 8606506

(43) Date de publication de la demande:
11.11.87 Bulletin 87/46

(45) Mention de la délivrance du brevet:
28.08.91 Bulletin 91/35

(84) Etats contractants désignés:
DE GB IT

(56) Documents cités:
EP-A- 0 177 800
FR-A- 2 403 567
US-A- 3 501 640

PATENT ABSTRACTS OF JAPAN, vol. 7, no.
162 (E-187)(1307), 16 juillet 1983; & JP-A-58
70 652

PATENT ABSTRACTS OF JAPAN, vol. 8, no.
281 (E-286)(1718), 21 décembre 1984; & JP-
A-59 148 445

(73) Titulaire: **MATRA**
**4 rue de Presbourg**
**F-75116 Paris(FR)**

(72) Inventeur: **Charlier, Jean**
**118 Bis rue Saint Jean**
**F-95300 Pontoise(FR)**
Inventeur: **Geenen, Bernard**
**34 Avenue de la Chardonnière**
**F-78124 Mareil Sur Mauldre(FR)**
Inventeur: **Laurent, Bernard**
**32 Rue Claire Pauilhac**
**F-31000 Toulouse(FR)**
Inventeur: **Lorsignol, Jean**
**17 Rue des Couteliers**
**F-31000 Toulouse(FR)**
Inventeur: **Malherbe, André**
**60 Rue Saint Jean**
**F-95300 Pontoise(FR)**
Inventeur: **Perbos, Jean-Luc**
**9 Rue des Vases**
**F-31000 Toulouse(FR)**

Rank Xerox (UK) Business Services

ELECTRONICS LETTERS, vol. 17, no. 3, 5 février 1981, pages 133-135, Londres, GB; R. WATANABE et al.: "New 2-channel multiplexer using polarisation"

(74) Mandataire: **Fort, Jacques et al CABINET PLASSERAUD 84, rue d'Amsterdam F-75009 Paris(FR)**

**Description**

L'invention concerne les dispositifs de transmission de données par voie optique et elle trouve une application particulièrement importante dans les liaisons entre satellites (notamment entre un satellite placé sur une orbite basse et un satellite géostationnaire).

On a déjà proposé d'utiliser, pour les liaisons optiques entre satellites, des diodes laser en tant que sources lumineuses. Les diodes laser ont l'avantage d'être de petite taille et fiables, d'avoir un rendement élevé et une durée de vie importante. Parmi les diodes laser, les diodes à l'arseniure de gallium présentent un intérêt particulier : des diodes monomode capables de fournir une puissance allant jusqu'à 50 mW environ en continu existent aujourd'hui dans la plage de longueur d'onde comprise entre 810 et 850 nm, et des capteurs de bon rendement sont disponibles dans la plage de longueur d'onde comprise entre 400 et 1100 nm.

L'indisponibilité de puissances plus élevées et l'importance des débits numériques à transmettre (typiquement 500 Mbit/s) ou l'intérêt de transmettre plusieurs canaux indépendants rendent cependant nécessaire d'associer plusieurs diodes laser. Diverses techniques de sommation de puissance et de multiplexage ont déjà été proposées. Elles sont résumées dans l'article de Begley et autres "Selection of laser diode beam combining techniques for free space communication" (janvier 1986, S.P.I.E., Los Angeles). Les techniques proposées présentent cependant des inconvénients graves. En particulier, beaucoup utilisent des lames dichroïques travaillant en incidence oblique pour assurer le multiplexage ou le démultiplexage (cette seconde opération étant la plus difficile à réaliser, car elle doit assurer une bonne isolation entre voies adjacentes). Ces lames dichroïques ne permettent d'atteindre le résultat recherché que très imparfaitement et imposent notamment un écart de longueur d'onde important entre canaux.

On a également proposé d'utiliser la très forte polarisation que présente la lumière émise par les diodes laser pour assurer, non pas un multiplexage en fréquence, mais l'accumulation suivant un seul trajet de sortie des faisceaux provenant de plusieurs diodes. Cette solution ne permet pas non plus d'arriver à un résultat satisfaisant du fait notamment que l'on a mis en oeuvre jusqu'ici des composants travaillant en incidence oblique pour ramener les faisceaux suivant le même axe.

Le document US-A-3 501 640 décrit un dispositif de transmission optique à multiplexage de faisceaux de lumière ayant des longueurs d'onde différentes, provenant soit d'un laser à plusieurs couleurs unique, soit de lampes à arc. Dans le mode de réalisation représentatif montré en figure 1 du brevet, le faisceau du laser est fractionné dans une structure en arbre comportant, en cascade, des quartz et des prismes séparateurs biréfringents. Cette disposition oblige à reporter la modulation des faisceaux en aval de tout le dispositif séparateur.

Le document JP-A-58 70652 décrit un système de transmission optique à multiplexage de fréquence ayant des émetteurs suivis de circuits de multiplexage de signaux optiques soumis à polarisation linéaire dans des plans de polarisation orthogonaux. Le dispositif utilise des fibres optiques dont on sait qu'elles ne peuvent conserver la polarisation que si elles sont monomodes, donc de très faible diamètre.

L'invention vise à fournir un dispositif de multiplexage en fréquence, utilisant le taux de polarisation élevé des diodes laser pour faciliter le multiplexage en fréquence et augmenter le nombre de voies disponibles dans une plage déterminée.

Dans ce but l'invention propose un dispositif de transmission optique à multiplexage d'au moins trois voies de longueurs d'onde différentes, ayant un émetteur comprenant :

- trois diodes laser fournissant des faisceaux optiques polarisés linéairement et à trois longueurs d'onde différentes $\lambda_2$, $\lambda_3$ et $\lambda_4$,
- sur le trajet de la lumière de longueur d'onde $\lambda_2$ émise par une des diodes, un ensemble comportant une lame quart d'onde pour la longueur d'onde $(2\lambda_2 - \lambda_4)$, un filtre de transmission de la longeur d'onde $\lambda_2$, une lame quart d'onde pour la longueur d'onde $\lambda_4$ et un polariseur, la diode de longueur d'onde $\lambda_2$ étant orientée pour que son faisceau soit transmis par le polariseur,
- des moyens pour diriger la lumière de longueur d'onde $\lambda_4$ provenant d'une autre diode sur le polariseur à $90°$ du faisceau de longueur d'onde $\lambda_2$ et avec la même direction de polarisation, de sorte que le faisceau de longueur d'onde $\lambda_4$ est réfléchi vers le filtre,
- et des moyens pour diriger la lumière de longueur d'onde $\lambda_3$, intermédiaire entre $\lambda_2$ et $\lambda_4$, sur le polariseur à l'opposé de la lumière de longueur d'onde $\lambda_4$ et avec une polarisation de même sens, de façon que la lumière de longueur d'onde $\lambda_3$ soit réfléchie suivant un trajet coaxial au trajet de sortie des longueurs d'onde $\lambda_2$ et $\lambda_4$.

Les derniers moyens mentionnés peuvent être utilisés pour multiplexer la longueur d'onde $\lambda_3$ et une longueur d'onde $\lambda_1$ hors de l'intervalle allant de $\lambda_2$ à $\lambda_4$. Ces derniers moyens peuvent avoir la même constitution que ledit ensemble, mais recevoir deux faisceaux de lumière de longueurs d'onde $\lambda_1$ et $\lambda_3$ ayant un plan de polarisation perpendiculaire à celui de la lumière de longueurs d'onde $\lambda_2$ et $\lambda_4$.

Il est possible d'augmenter encore le nombre de longueurs d'onde, dans toute la mesure autorisée par la bande de fréquence dans laquelle peuvent travailler les sources et les détecteurs de lumière.

L'invention propose également un dispositif de transmission complet comprenant un récepteur ayant une constitution dans une large mesure symétrique de celle de l'émetteur. Etant donné que l'orientation du récepteur par rapport à l'émetteur peut changer, il sera généralement nécessaire de placer, sur le faisceau de sortie, une lame quart d'onde pour la fréquence moyenne de la plage de transmission afin d'obtenir un faisceau à polarisation circulaire. Par ailleurs, les surfaces optiques de réflexion devront être traitées de façon à conserver au maximum la polarisation.

Il est important de relever que le dispositif n'utilise que des filtres travaillant en incidence normale et des lames quart d'onde parfaitement adaptées, sauf en ce qui concerne la lame destinée à donner une polarisation circulaire au faisceau de sortie. On réduit ainsi les pertes et on évite les distorsions et pertes de polarisation beaucoup plus que dans les systèmes antérieurement connus.

L'invention sera mieux comprise à la lecture de la description qui suit d'un mode particulier d'exécution et d'une variante, donnés à titre d'exemples non limitatifs. La description se réfère aux dessins qui l'accompagnent, dans lesquels :

- la Figure 1 est un schéma montrant une constitution possible de l'émetteur d'un dispositif de transmission à multiplexage de quatre fréquences,
- la Figure 2 montre une répartition possible des fréquences dans l'émetteur de la Figure 1,
- la Figure 3, similaire à la Figure 1, montre un émetteur à multiplexage de six fréquences,
- la Figure 4 est un schéma d'un récepteur utilisable en liaison avec l'émetteur de la Figure 1.

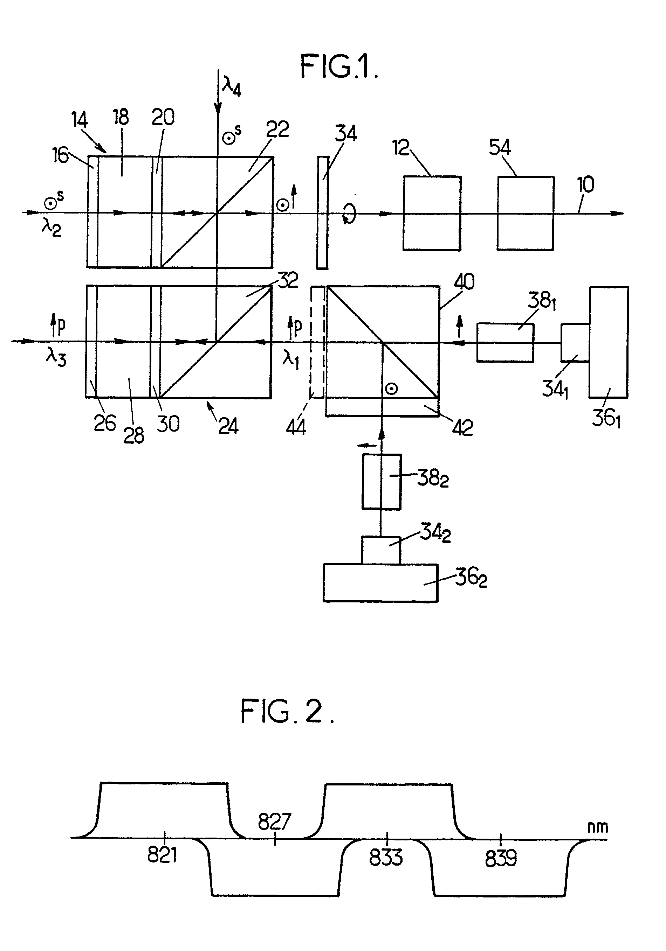

L'émetteur montré en Figure 1 est destiné à multiplexer quatre canaux à fréquences $\lambda_1$, $\lambda_2$, $\lambda_3$ et $\lambda_4$ sur un même faisceau de sortie 10 orientable. Les quatre canaux comportent chacun une source de lumière polarisée qu'on supposera être une diode laser GaAs, avec $\lambda_1$ = 821 nm, $\lambda_2$ = 827 nm, $\lambda_3$ = 833 nm et $\lambda_4$ = 839 nm (Figure 2). L'écartement entre deux longueurs d'onde adjacentes n'est que de 6 nm mais, du fait de la polarisation croisée dans deux voies adjacentes, il est possible d'accepter une largeur de bande pour chaque diode supérieure à 6 nm, ce qui a deux conséquences : d'une part, il n'est pas nécessaire d'utiliser un filtre à bande étroite qui augmenterait les pertes ; d'autre part, il n'est pas nécessarie que les diodes laser aient une émission exactement centrée sur les valeurs définies ci-dessus, ce qui facilite leur obtention et réduit l'incidence de la variation de longueur d'onde due au vieillissement et à l'imperfection de la stabilisation en température de ces diodes.

La lumière émise par une diode laser est naturellement polarisée dans le plan de la jonction de la diode et le faisceau fourni par une telle diode est notablement elliptique. Etant donné que l'on veut obtenir, à la sortie, une ellipticité qui est la même pour toutes les voies de façon qu'il soit possible de former un faisceau cylindrique à l'aide d'un anamorphoseur 12, on sera fréquemment amené à placer toutes les diodes laser avec la même orientation et à intercaler, sur les voies qui doivent avoir une polarisation croisée avec les autres, une lame $\lambda/2$.

Le multiplexeur de l'émetteur montré en Figure 1 comprend un ensemble 14 qui comporte, sur le trajet de la lumière de longueur d'onde $\lambda_2$, ayant un premier sens de polarisation s, une première lame 16, un filtre 18 de fréquence centrale correspondant à la longueur d'onde $\lambda_2$, une seconde lame 20 et enfin un cube polariseur 22. La diode laser qui émet la lumière à la longueur d'onde $\lambda_4$ est placée de façon à avoir également la polarisation s et à fournir un faisceau qui tombe sur le bloc polariseur 22 orthogonalement au premier.

La lame 20 est ajustée de façon à être quart d'onde pour la longueur d'onde $\lambda_4$. La lame 16 correspond à $(2\lambda_2 - \lambda_4)/4$. Dans ces conditions,

- La lumière de longueur d'onde $\lambda_4$, de polarisation s, est réfléchie par le bloc polariseur 22 vers la lame 20. Elle traverse la lame 20, qui lui donne une polarisation circulaire, puis est réfléchie par le filtre 18 , car ce filtre est centré sur la longueur d'onde $\lambda_2$. La lumière retraverse la lame 20 qui lui donne une polarisation rectiligne, cette fois de sens p, ce qui lui permet de traverser le polariseur 22 et de sortir avec une polarisation p.
- La lumière de longueur d'onde $\lambda_2$, de polarisation s , est polarisée pratiquement circulairement par la lame 16 qui est presque quart d'onde pour $\lambda_2$ ($\lambda_2$ - $\lambda_4$ étant faible par rapport à $\lambda_2$). La lumière traverse ensuite le filtre 18 centré sur $\lambda_2$. Elle prend la polarisation linéaire p en traversant la lame 20 (l'ensemble des lames 16 et 20 ayant un effet identique à celui d'une lame unique $\lambda_2/2$). Cette lumière est ensuite transmise par le polariseur 22 et sort du multiplexeur dans le même faisceau que la lumière de longueur d'onde $\lambda_4$, en polarisation p.

Pour assurer le multiplexage d'une troisième voie, il suffit d'envoyer la lumière correspondante sur le bloc polariseur 22 en sens inverse de la lumière de longueur d'onde $\lambda_4$.

Dans le cas représenté sur la Figure 1, le multiplexeur comprend un second ensemble 24 destiné à multiplexer les longueurs d'onde $\lambda_1$ et $\lambda_3$.

L'ensemble 24 comporte, sur le trajet de la lumière de longueur d'onde $\lambda_3$, une lame 26 d'épaisseur $(2\lambda_3 - \lambda_1)/4$, un filtre 28 centré sur $\lambda_3$, une lame 30 quart d'onde pour $\lambda_1$ et un cube polariseur 32.

La lumière de longueur d'onde $\lambda_1$, de sens de polarisation p, est transmise par le polariseur 32, traverse la lame 30 qui lui donne une polarisation circulaire, est réfléchie par le filtre 28 centré sur $\lambda_3$, reprend une polarisation linéaire (cette fois de sens s) à son deuxième passage dans la lame 30 et est alors réfléchie par le polariseur 32 vers le polariseur 22. Elle sort du multiplexeur avec la polarisation s.

Enfin, la lumière de longueur d'onde $\lambda_3$ entre avec la polarisation linéaire p dans l'ensemble 24. La lame 26 lui donne une polarisation pratiquement circulaire. La lumière est transmise par le filtre 28 centré sur $\lambda_3$. La lame 30 lui donne une polarisation rectiligne de direction s. Enfin, la lumière est réfléchie successivement par les deux polariseurs 32 et 22 et sort du multiplexeur en polarisation s

A la sortie du multiplexeur, une lame 34, pouvant être une lame quart d'onde pour la longueur d'onde $(\lambda_1 + \lambda_4)/2$, c'est-à-dire la moyenne dans la plage allant de $\lambda_1$ à $\lambda_4$, fournit un faisceau en polarisation circulaire.

Les divers composants ont une constitution qui peut être classique. Les polariseurs 22 et 32 sont par exemple constitués par des empilements de couches minces sur des prismes de verre. On peut aisément obtenir des coefficients de transmission et de réflexion atteignant 98%. Des lames quart d'onde sont couramment disponibles dans le commerce. Les filtres 18 et 28 peuvent être constitués en technologie couche mince. Du fait qu'ils travaillent en incidence normale, ils présentent une bande passante bien définie.

Il faut remarquer au passage que, en associant à chaque diode laser un collimateur approprié, on peut obtenir un faisceau de sortie très peu divergent et donc faire travailler l'ensemble des éléments optiques dans de bonnes conditions. Le maintien des caractéristiques, et notamment de l'indice des verres, peut être assuré par régulation thermique.

Des impératifs de sécurité peuvent amener à prévoir une redondance de chacune des sources. Sur la Figure 1, seule à été représentée la source destinée à fournir la longueur d'onde $\lambda_1$. Elle comporte deux diodes laser $34_1$ et $34_2$, munies de leurs circuits d'alimentation et de leurs circuits de régulation thermique par effet Peltier $36_1$ et $36_2$.

Un collimateur $38_1$ ou $38_2$ est placé à la sortie de chaque diode. Le faisceau provenant de la diode $34_1$ traverse directement un polariseur 40 avant d'arriver sur le polariseur 32. Sur le trajet du faisceau de sortie de la diode $34_2$, qui arrive sur l'analyseur à 90° du faisceau de sortie de la diode $34_1$, est interposée une lame 42 demi-onde pour la longueur d'onde $\lambda_1$. Lorsque c'est la diode $34_2$ qui est utilisée, une lame de compensation 44, demi-onde pour $\lambda_1$, est placée à la sortie du polariseur 40.

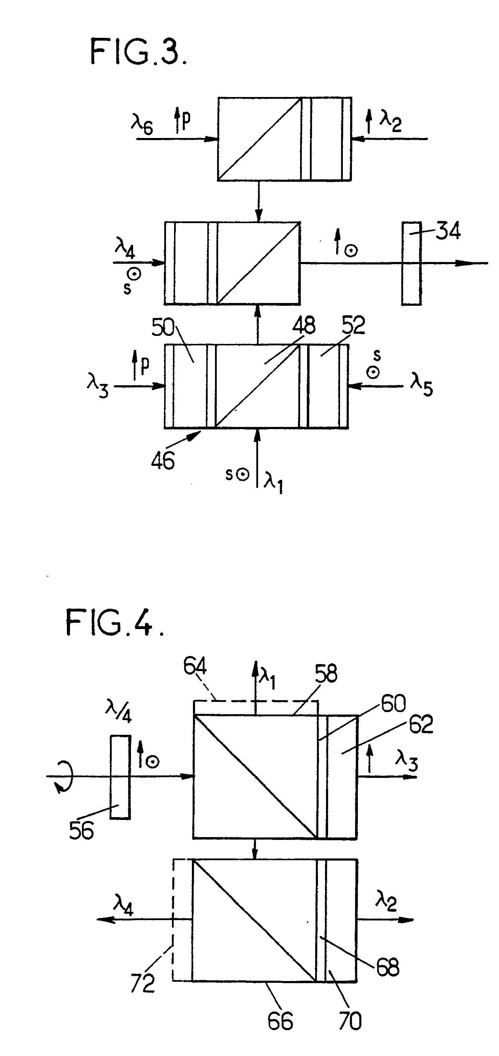

Il est possible de multiplexer un nombre de longueurs d'onde supérieur à 4. La Figure 3 montre, à titre d'exemple, un multiplexeur d'émission fournissant un faisceau de sortie comportant six longueurs d'onde échelonnées $\lambda_1$, $\lambda_2$,..., $\lambda_6$. Les composantes de longueurs d'onde $\lambda_1$, $\lambda_3$ et $\lambda_5$ du faisceau de sortie ont une polarisation s, tandis que les composantes $\lambda_2$, $\lambda_4$, $\lambda_6$ ont une polarisation p. Le multiplexage exige simplement d'ajouter un ensemble 46 comportant un polariseur 48, deux filtres 50 et 52 et quatre lames quart d'onde aux moyens prévus dans le cas de la Figure 1.

Les lames quart d'onde ne sont plus, dans le cas de la Figure 3, parfaitement appairées mais cela est pratiquement sans incidence sur les performances car la mauvaise polarisation ne se retrouve pas dans le faisceau de sortie.

Il est possible de multiplexer un nombre encore accru de longueurs d'onde mais, dans la pratique, il est difficile de dépasser six faisceaux d'entrée lorsque l'on utilise comme sources des diodes laser. En effet, il devient difficile d'avoir des filtres suffisamment sélectifs pour réfléchir totalement une longueur d'onde et transmettre totalement une autre longueur d'onde lorsque les deux valeurs sont trop proches.

Au lieu d'utiliser une répartition du genre montré en Figure 2 (éventuellement étendue à six fréquences), on peut encore adopter des valeurs égales et des polarisations croisées pour $\lambda_1$ et $\lambda_2$, $\lambda_3$ et $\lambda_4$, etc. On peut ainsi augmenter encore le nombre des fréquences. Il suffit en effet pour arriver à ce résultat que les filtres aient un coefficient de transmission très élevé pour la longueur d'onde qui leur est associée ($\lambda_2$ et $\lambda_3$ dans le cas de la Figure 1), une bonne réflexion et une très faible transmission pour les longueurs d'onde adjacentes ou égales ayant une polarisation croisée, c'est-à-dire $\lambda_1$ par rapport au filtre 28 et $\lambda_4$ par rapport au filtre 18.

L'émetteur, lorsqu'il est monté sur satellite, sera complété par un dispositif de pointage et un télescope, schématisé sur la Figure 1 en 54. Le télescope peut être du type Cassegrain. Le dispositif de pointage comportera avantageusement, d'une part, un miroir de pointage grossier, d'autre part, un miroir de pointage fin. Etant donné les distances de parcours, il sera nécessaire de prévoir soit un système de poursuite, soit un système de calcul tenant compte de la nécessité de "pointer en avant" du récepteur du fait que le temps mis par la lumière pour aller de l'émetteur au récepteur n'est pas négligeable.

Il n'est pas nécessaire ici de définir les dispositifs d'asservissement ou de calculs, car ils peuvent avoir l'une des constitutions connues pour les liaisons entre satellites.

Le démultiplexeur prévu dans le récepteur aura généralement une constitution symétrique de celle du multiplexeur. La Figure 4 montre, à titre d'exemple, un démultiplexeur pouvant appartenir à un dispositif dont l'émetteur est du type montré en Figure 1. Le démultiplexeur, placé en aval d'une lame quart d'onde 56, comporte un premier cube polariseur 58 qui transmet les longueurs d'onde $\lambda_1$ et $\lambda_3$ qui présentent une polarisation p, et réfléchit les longueurs d'onde $\lambda_2$ et $\lambda_4$, de polarisation s. Sur le trajet du faisceau contenant les longueurs d'onde $\lambda_1$ et $\lambda_3$ sont interposés successivement une lame 60, quart d'onde pour $\lambda_1$ et une filtre 62 centré sur $\lambda_3$. La longueur d'onde $\lambda_1$ est réfléchie par le filtre et sa double traversée de la lame 60 ayant fait tourner sa polarisation de 90°, elle est réfléchie par le polariseur 58 et sort suivant un trajet orthogonal à celui de la composante $\lambda_3$. Un filtre 64, centré sur $\lambda_1$, peut être interposé à la sortie du polariseur sur le trajet de la composante $\lambda_1$.

Un second cube polariseur 66, également associé à une lame 68, quart d'onde pour $\lambda_4$, et un filtre 70 centré sur $\lambda_2$, assurent la séparation des composantes $\lambda_2$ et $\lambda_4$. Un filtre 72, centré sur $\lambda_4$, peut être interposé sur le trajet de sortie de $\lambda_4$.

Il est important de noter que, dans le démultiplexeur, les filtres 62 et 70 travaillent en réflexion sur une longueur d'onde qui n'est pas directement adjacente à la longueur d'onde sur laquelle ils travaillent en transmission, ce qui améliore l'isolation.

Il n'est pas nécessaire de décrire ici le démultiplexeur associé au multiplexeur de la Figure 3, étant donné qu'il découle directement des indications ci-dessus.

## Revendications

1. Dispositif de transmission optique à multiplexage d'au moins trois voies de longueurs d'onde différentes, caractérisé en ce que son émetteur comprend :

   - trois diodes laser fournissant des faisceaux optiques polarisés linéairement et à trois longueurs d'onde différentes $\lambda_2$, $\lambda_3$, et $\lambda_4$,
   - sur le trajet de la lumière de longueur d'onde $\lambda_2$ émise par une des diodes, un ensemble comportant une lame (16) quart d'onde pour la longueur d'onde ($2\lambda_2 - \lambda_4$), un filtre (18) de transmission de la longueur d'onde $\lambda_2$, une lame (20) quart d'onde pour la longueur d'onde $\lambda_4$ et un polariseur (22), la diode de longueur d'onde $\lambda_2$ étant orientée pour que son faisceau soit transmis par le polariseur,
   - des premiers moyens pour diriger la lumière de longueur d'onde $\lambda_4$ provenant d'une autre diode sur le polariseur (22) à 90° du faisceau de longueur d'onde $\lambda_2$ et avec la même direction de polarisation, de sorte que le faisceau de longueur d'onde $\lambda_4$ est réfléchi vers le filtre (18),
   - et des seconds moyens pour diriger la lumière de longueur d'onde $\lambda_3$, intermédiaire entre $\lambda_2$ et $\lambda_4$, sur le polariseur (22) à l'opposé de la lumière de longueur d'onde $\lambda_4$ et avec une polarisation de même sens, de façon que la lumière de longueur d'onde $\lambda_3$ soit réfléchie suivant un trajet coaxial au trajet de sortie des longueurs d'onde $\lambda_2$ et $\lambda_4$.

2. Dispositif selon la revendication 1, caractérisé en ce que les seconds moyens (24) multiplexent la longueur d'onde $\lambda_3$ et une longueur d'onde $\lambda_1$ hors de l'intervalle allant de $\lambda_2$ à $\lambda_4$.

3. Dispositif selon la revendication 2, caractérisé en ce que les seconds moyens ont la même constitution que ledit ensemble, mais reçoivent deux faisceaux de lumière de longueurs d'onde $\lambda_1$ et $\lambda_3$ ayant un plan de polarisation perpendiculaire à celui des longueurs d'onde $\lambda_2$ et $\lambda_4$.

4. Dispositif selon la revendication 1, caractérisé en ce que les premiers moyens comportent également un polariseur supplémentaire recevant, dans deux directions opposées orthogonales à sa sortie, deux faisceaux présentant la même polarisation, l'un des faisceaux traversant, avant d'arriver au polariseur, une lame sensiblement quart d'onde, un filtre pour la longueur d'onde de ce faisceau et une lame quart d'onde pour la longueur d'onde de l'autre faisceau.

5. Dispositif selon l'une quelconque des revendications 1 à 4, caractérisé en ce qu'il comprend une lame interposée sur le faisceau de sortie, pour circulariser la polarisation.

6. Dispositif selon l'une quelconque des revendications 1 & 5, caractérisé en ce qu'il comprend un récepteur ayant un démultiplexeur d'entrée symétrique du multiplexeur.

**Claims**

1. An optical transmission device with multiplexing of at least three channels at different wavelengths, characterized in that its transmitter comprises:
   - three laser diodes delivering linearly polarized optical beams at three different wavelengths $\lambda_2$ $\lambda_3$ and $\lambda_4$,
   - on the path of the light of wavelength $\lambda_2$ emitted by one of the diodes, an assembly comprising a plate (16) which is quarter-wave for the wavelength $(2\lambda_2 - \lambda_4)$, a filter (18) for transmission of wavelength $\lambda_2$, a plate (20) which is quarter-wave for wavelength $\lambda_4$ and a polarizer (22), the diode having wavelength $\lambda_2$ being oriented for its beam to be transmitted by the polarizer,
   - first means for directing the light of wavelength $\lambda_4$ from another diode onto the polarizer (22) at $90°$ from the beam having wavelength $\lambda_2$ and with the same direction of polarization, whereby the beam of wavelength $\lambda_4$ is reflected towards filter (18),
   - and second means for directing the light of wavelength $\lambda_3$, intermediate between $\lambda_2$ and $\lambda_4$, onto polarizer (22) in a direction opposite to the light of wavelength $\lambda_4$ and having a polarization in the same direction, whereby the light of wavelength $\lambda_3$ is reflected along a path which is coaxial with the output path of wavelengths $\lambda_2$ and $\lambda_4$.

2. Device according to claim 1, characterized in that the second means (24) multiplexes the wavelength $\lambda_3$ and a wavelength $\lambda_1$ outside the range of from $\lambda_2$ to $\lambda_4$.

3. Device according to claim 2, characterized in that the second means has the same construction as said assembly, but receives two light beams of wavelengths $\lambda_1$ and $\lambda_3$ having a polarization plane which is orthogonal to that of wavelengths $\lambda_2$ and $\lambda_4$.

4. Device according to claim 1, characterized in that the first means also comprises a supplemental polariser which receives, in two opposite directions which are orthogonal to the output thereof, two beams having the same polarization, one of the beams traversing, before it arrives to the polarizer, a plate which is substantially quarter-wave, a filter for the wavelength of that beam and a plate which is quarter-wave for the wavelenth of the other beam.

5. Device according to any one of claims 1-4, characterized in that it comprises a plate interposed on the output beam for circularizing the polarization.

6. Device according to any one of claims 1-5, characterized in that it comprises a receiver which has an input demultiplexer symetrical from the multiplexer.

**Patentansprüche**

1. Optische Übertragungseinrichtung mit Multiplexbetrieb von wenigstens drei Kanälen für unterschiedliche Wellenlängen, **dadurch gekennzeichnet, daß** die Sendeeinrichtung hierfür aufweist:
   - drei Laserdioden, die optische Strahlenbündel mit linearer Polarisation und mit drei verschiedenen Wellenlängen $\lambda_2$, $\lambda_3$ und $\lambda_4$ liefern,
   - auf der Stecke des Lichts mit der Wellenlänge $\lambda_2$, welche von einer der Dioden abgegeben wird, eine Anordnung, die ein Viertelwellenblättchen (16) für die Wellenlänge $(2\lambda_2 - \lambda_4)$, ein Übertragungsfilter (18) für die Wellenlänge $\lambda_2$, ein Viertelwellenblättchen (20) für die Wellenlänge $\lambda_4$ und einen Polarisator (22) aufweist, wobei die Diode für die Wellenlänge $\lambda_2$ so ausgerichtet ist, daß ihr Strahlenbündel durch den Polarisator übertragen wird,
   - erste Einrichtungen, um das Licht der Wellenlänge $\lambda_4$, das von einer anderen Diode kommt, mit $90°$ zu dem Strahlenbündel mit der Wellenlänge $\lambda_2$ und mit der gleichen Polarisationsrichtung auf den Polarisator (22) zu lenken, so daß das Strahlenbündel mit der Wellenlänge $\lambda_4$ in Richtung auf das Filter (18) reflektiert wird,
   - und zweite Einrichtungen, um das Licht mit der Wellenlänge $\lambda_3$, die zwischen $\lambda_2$ und $\lambda_4$ liegt, in Gegenrichtung zu dem Licht mit der Wellenlänge $\lambda_4$ und mit der gleichen Polarisationsrichtung auf den Polarisator (22) zu lenken, so daß das Licht der Wellenlänge $\lambda_3$ gemäß einer Strecke reflektiert wird, die koaxial zu der

Ausgangsstrecke der Wellenlängen $\lambda_2$ und $\lambda_4$ ist.

2. Einrichtung nach Anspruch 1, **dadurch gekennzeichnet, daß** die zweiten Einrichtungen (24) die Wellenlänge $\lambda_3$ und die Wellenlänge $\lambda_1$ außerhalb des Intervalls von $\lambda_2$ zu $\lambda_4$ multiplexen.

3. Einrichtung nach Anspruch 2, **dadurch gekennzeichnet, daß** die zweiten Einrichtungen den gleichen Aufbau wie die genannte Anordnung haben, aber zwei Strahlenbündel von Licht mit den Wellenlängen $\lambda_1$ und $\lambda_3$ empfangen, die eine Polarisationsebene haben, die senkrecht zu der der Wellenlängen $\lambda_2$ und $\lambda_4$ ist.

4. Einrichtung nach Anspruch 1, **dadurch gekennzeichnet, daß** die ersten Einrichtungen in gleicher Weise einen zusätzlichen Polarisator aufweisen, der in zwei orthogonal zu seinem Eingang gegengerichteten Richtungen zwei Strahlenbündel empfängt, die die gleiche Polarisation haben, wobei das eine Strahlenbündel, ehe es am Polarisator ankommt, ein empfindliches Viertelwellenplättchen, ein Filter für die Wellenlänge dieses Strahlenbündels und ein Viertelwellenplättchen für die Wellenlänge des anderen Strahlenbündels passiert.

5. Einrichtung nach einem der Ansprüche 1 bis 4, **dadurch gekennzeichnet, daß** sie ein auf dem Ausgangsstrahlenbündel zwischengeschobenes Plättchen aufweist, um die die Polarisation zu zirkularisieren.

6. Einrichtung nach einem der Ansprüche 1 und 5, **dadurch gekennzeichnet, daß** sie einen Empfänger aufweist, der einen Demultiplexer mit einem zum Multiplexer symmetrischen Eingang hat.

# FIG.1.

# FIG.2.

## FIG.3.

## FIG.4.